Europäisches Patentamt

European Patent Office

Office européen des brevets

(11) Publication number: **0 412 021 B1**

(12) **EUROPEAN PATENT SPECIFICATION**

(45) Date of publication of patent specification: **27.12.95** (51) Int. Cl.⁶: **C09K 5/00**

(21) Application number: **90402243.1**

(22) Date of filing: **03.08.90**

(54) **Latent thermal energy storage material**

(30) Priority: **04.08.89 JP 203507/89**
**04.08.89 JP 203508/89**
**04.08.89 JP 203509/89**
**04.08.89 JP 203510/89**

(43) Date of publication of application:
**06.02.91 Bulletin 91/06**

(45) Publication of the grant of the patent:
**27.12.95 Bulletin 95/52**

(84) Designated Contracting States:
**DE FR GB SE**

(56) References cited:
**EP-A- 0 166 662**
**US-A- 4 487 856**

**PATENT ABSTRACTS OF JAPAN, FILE SUP-**
**PLIER JAPS, 03-07-1987, Tokyo, JP; & JP-A-62**
**149 334**

**PATENT ABSTRACTS OF JAPAN, FILE SUP-**
**PLIER JAPS, 02-07-1987, Tokyo, JP; & JP-A-62**
**148 588**

(73) Proprietor: **MITSUBISHI CABLE INDUSTRIES**
**Co., Ltd.**
**8-Banchi, Higashimukaijima Nishinocho**
**Amagasaki-shi,**
**Hyogo-ken (JP)**

(72) Inventor: **Momose, Chiaki, C/o Mitsubishi Ca-**
**ble Industries**
**Itami Seisaku-sho, 8-Banchi,**
**Higashimukaijima**
**Nishinocho,**
**Amagasaki-shi,**
**Hyogo-ken (JP)**
Inventor: **Nakagawara, Kiyoshi, Mitsubishi Ca-**
**ble Industries**
**Itami Seisaku-sho, 8-Banchi,**
**Higashimukaijima**
**Nishinocho,**
**Amagasaki-shi,**
**Hyogo-ken (JP)**
Inventor: **Hayashi, Yuichi, C/o Mitsubishi Ca-**
**ble Industries**
**Itami Seisaku-sho, 8-Banchi,**
**Higashimukaijima**
**Nishinocho,**
**Amagasaki-shi,**
**Hyogo-ken (JP)**

EP 0 412 021 B1

(74) Representative: **Hasenrader, Hubert et al**
**Cabinet Beau de Loménie**
**158, rue de l'Université**
**F-75340 Paris Cédex 07 (FR)**

# EP 0 412 021 B1

**Description**

BACKGROUND OF THE INVENTION

1. Field of the Invention

The present invention relates to heat storage materials, and more particularly to novel latent thermal energy storage materials comprising a large quantity of paraffin as the storage component.

2. Description of the Prior Art

Conventional heat storage materials are based on different principles and include those utilizing the sensible heat of substances, those utilizing latent heat involved in phase changes of substances, and those utilizing the heat of chemical reactions of substances. From the viewpoint of actual use, attention is presently directed to heat storage materials which utilize the phase change latent heat of substances. Such materials have found use in air conditioners and building materials of the heat storage type, heat insulating devices or apparatus, etc.

The document EP-A-0 166 662 discloses a process for preparing an energy storing material according to which a monomer comprising at least one ethylenic bond is dissolved into a liquid capable of storing energy, such as paraffins, and that the monomers are polymerised in such a way as to obtain a tridimensional cross-linking of the polymerisates by way of entrapping the energy-storing liquid.

On the other hand, the document JP-A-62 149 334 discloses a process for preparing encapsulated energy storage particles. In this process, the particles contain a composite in which an organic energy storage material such as paraffins is absorbed into a polymer aggregate made of in particular polyethylene or a rubber.

As one of the heat storage materials utilizing phase change latent heat, an organic heat storage material is known in which a paraffin is used as the storage component. This material is inexpensive and has therefore attracted attention. With this material, the paraffin stores heat when the phase changes from solid to liquid and releases heat when the phase changes from liquid to solid. Accordingly, the use of paraffin requires some measure to prevent the paraffin from flowing out as a leakage when in the form of a liquid. Presently proposed as such measures are, for example, (1) the method of accommodating a paraffin in hollow balls or capsules of organic high polymer, and (2) the method of immersing pellets, sheets or like molded bodies of polyolefin in a bath of molten paraffin to thereby impregnate the molded bodies with the paraffin. However, these methods have the following problems.

With the method (1), the hollow ball or capsule has a small capacity to accommodate paraffin when made of a thick film of organic high polymer for enclosing the paraffin, consequently containing a reduced amount of paraffin to store a smaller amount of heat. If the organic polymer film is conversely thin, an increased space is available for accommodating the paraffin, whereas a problem will then be encountered in that the film breaks during a long period of use, permitting the paraffin to flow out. Furthermore, hollow balls or capsules are used generally in a large number as packed in a large bag or box, with the result that spaces which are useless from the viewpoint of heat storage are inevitably formed between the hollow balls or capsules. Accordingly, when the bag or box is viewed in its entirety as a heat storage material, the material has the drawback of containing the paraffin in an amount smaller than is expected.

In the case of the impregnation method (2), it is known that the polyolefin molded body, for example, can be impregnated with a quantiy of paraffin which is as large as at least 70 wt. %. The molded body impregnated with the paraffin further has the advantage of being free of the problem that the film used in the method (1) will break. Nevertheless, the heat storage material prepared by this method has the fatal drawback that the impregnating paraffin gradually migrates to render the surface of the material sticky within a relatively short period of time. The surface of the storage material, if sticky owing to the paraffin, soils other articles in the neighbourhood, giving rise to various problems.

SUMMARY OF THE INVENTION

An object of the present invention is to provide a latent thermal energy storage material which contains a large quantity of a organic energy storage component (paraffin) and which is adapted to store a large amount of thermal energy.

Another object of the present invention is to provide a latent thermal energy storage material which contains a large quantity of a paraffin without bleeding thereof and which is therefore free of the foregoing problem of stickiness due to the bleeding substantially.

Another object of the present invention is to provide a latent thermal energy storage material which is highly amenable to molding or shaping and which can be crosslinked, expanded or treated otherwise when required.

Still another object of the present invention is to provide a storage material which has stored therein latent thermal energy in a large amount of at least 30 kcal/kg, preferably at least 35 kcal/kg, in the range of temperatures for use and which will not substantially melt, drip, separate into phases or bleed in the form of a liquid even at temperatures not lower than the maximum crystal transition temperature (Tmax, corresponding to the melting point in many cases as will be described later) of the paraffin used, is not brittle at temperatures lower than Tmax (i.e., at temperatures at which the paraffin is solid), can be made into sheets without cracking, and has suitable flexibility.

These objects are fulfilled by a latent thermal energy storage material characterized in that the material comprises a paraffin serving as a storage component, and a binder component comprising a hydrocarbon organic high polymer in an amount of 5 to 30 parts by weight per 100 parts by weight of the paraffin, the paraffin and the binder component being mixed together by mechanical means.

The binder component of hydrocarbon organic high polymer and the paraffin are mixed together into a uniform composition by mechanical means. In this case, even if the paraffin in used in such a large amount as mentioned above (i.e., 333 to 2000 parts by weight, calculated as the amount of paraffin per 100 parts by weight of the binder component), the composition surprisingly exhibits high moldability, with the paraffin substantially prevented from bleeding to the surface of the molded body prepared from the composition as will become apparent from a comparison between examples of the invention and comparative examples given later. Quite unexpectedly, therefore, the objects of the present invention, which have in no way been attained insofar as we are aware, can be fulfilled by uniform mixing by mechanical means.

DETAILED DESCRIPTION OF THE INVENTION

According to the present invention, it is essential that a hydrocarbon organic high polymer and a organic energy storage component (paraffin) be mixed together by mechanical means to obtain a uniform composition. The expressing "mixing by mechanical means" means agitating, mixing or kneading of the paraffin and the organic high polymer in a state in which the two components are made flowable and deformable under the action of an external force by being subjected to a high temperature or by causing the melt of at least one of the two components at least to swell the other component therewith or preferably to dissolve the other component therein. The composition is prepared, for example, by dissolving the hydrocarbon organic high polymer in the paraffin as maintained at 100 to 200° C in a molten state, and agitating and mixing the resulting solution having a high temperature, or by kneading and mixing the two components at 50 to 250° C with two rolls, Banbury mixer, extruder, two-screw kneader-extruder or like usual kneader-mixer. Although it is desirable to mix the two components thoroughly to the greatest possible extent, the objects of the present invention can be fulfilled by mixing them generally for about 1 to about 150 minutes to such an extent that the components are found to have been uniformly mixed together with the unaided eye.

The composition obtained in the form of a solution by mixing is molded as it is or as cooled slightly. For molding, the composition is poured into molds and made into sheets or plates as desired. Since the composition solidifies at a temperature lower than Tmax of the paraffin used, the composition may be molded into a block, which is then cut into sheets or plates. Alternatively, the composition may be applied to films, fabrics or fibers for coating or impregnation to obtain sheets or plates. Furthermore, the composition can be packed in a bag of polyethylene or the like and then made into a sheet or plate during subsequent cooling. When an extruder is used, the composition can be molded into sheets, plates, rods or pipes. Such rods or pipes may be cut to a short length to prepare grains or pellets.

The paraffin to be used in the present invention as the storage component is an organic compound having Tmax which, when measured according to JIS K 7121 (Method of Measuring Transition Temperatures of Plastics), is in the range of temperatures for use, i.e., in the range of from room temperature to 100° C, preferably from room temperature to about 80° C. The term "room temperature" as used in this case refers to the lowest temperature to be encountered by the storage material of the invention during use.

Examples of preferred paraffins are various paraffins, waxes, stearic acid, palmitic acid and like fatty acids, and polyethylene glycol and like alcohols. These paraffins are used singly, or at least two of them are used in admixture.

In the above-mentioned range of temperatures for use, some of the paraffins have a single crystal transition temperature (i.e., Tmax in this case), or some of them have two or more crystal transition

4

temperatures. Many of mixtures of at least two paraffins also have two or more crystal transition temperatures. In these cases, the highest crystal transition temperature corresponds to Tmax. While the paraffins for use in the present invention are not always limited to those having a distinct melting point (the temperature at which the paraffin entirely changes from solid to liquid in phase), Tmax generally corresponds to the melting point in the case of many paraffins. With paraffins having two or more crystal transition temperatures in the range of temperatures for use, all the crystal transition temperatures can be utilized for storing latent thermal energy.

Such hydrocarbon organic high polymers are used singly, or at least two of them are used in combination. Given below are examples of useful hydrocarbon organic high polymers.

(1) Polyolefin polymers

Homopolymers of $\alpha$-olefins such as polymethylene, polyethylene and polypropylene; copolymers of olefins including copolymers of methylene as the main monomer and ethylene, propylene or the like, copolymers of ethylene as the main monomer and methylene, propylene or an $\alpha$-olefin having 4 to 12 carbon atoms, and copolymers of propylene as the main monomer and other olefin; copolymers of an $\alpha$-olefin, such as ethylene, propylene or butene, and other monomer, such as vinyl acetate, ethyl acrylate or ethyl methacrylate; and these polymers as halogenated to a slight extent. These polymers may have no or low crystallinity or may be crystalline. Those of no or low crystallinity are classified as hydrocarbon rubbers as the case may be.

(2) Thermoplastic elastomers

Among those which are known or can be known as "thermoplastic elastomers" in the field of rubbers and plastics, the elastomers having rubber elasticity at least in the temperature range of from the above-mentioned room temperature to Tmax of the paraffin to be used plus 10° C, preferably in the temperature range of not lower than the room temperature to Tmax plus 20° C. Also usable are of course those retaining rubber elasticity at temperatures higher than Tmax plus 20° C. Examples of such elastomers are those meeting the above requirement and suitably selected from among the known thermoplastic elastomers of the styrene, olefin, urethane or ester type. Examples of preferred elastomers are styrene block copolymer elastomers and olefin elastomers. Useful among styrene block copolymer elastomers are, for example, those represented by A-B-A wherein A is polystyrene, and B is polybutadiene, polyisoprene, or ethylene or butylene obtained by hydrogenating either of these polymers. More specific examples of olefin thermoplastic elastomers are a mixture of ethylene-propylene copolymer or ethylene-propylene-diene terpolymer, and polyethylene or polypropylene, and a polymer obtained by graft-polymerizing ethylene or propylene with ethylene-propylene copolymer or ethylene-propylene-diene terpolymer.

(3) Hydrocarbon rubbers

Natural rubber, styrene-butadiene copolymer rubber, isobutylene-isoprene rubber, isoprene rubber, ethylene-propylene copolymer rubber, ethylene-propylene-diene terpolymer rubber, ethylene-vinyl acetate copolymer rubber, ethylene-ethyl acrylate copolymer rubber and the like.

The hydrocarbon organic high polymer serving as the binder component may be crosslinkable or non-crosslinkable. When to be used as crosslinked, it is desirable that the polymer have rubberlike properties rather than the properties of plastics in the crosslinked state. When to be used without crosslinking, the polymer preferably has similar properties in the non-crosslinked state. The paraffin can then be enclosed in the polymer with good stability and is less likely to offer the problem of bleeding. Preferable from this viewpoint are the thermoplastic elastomers (2), the hydrocarbon rubbers (3), and some of the polyolefin polymers (1), i.e., copolymers of ethylene as the main monomer and an $\alpha$-olefin having 4 to 12 carbon atoms, copolymers of an $\alpha$-olefin, such as ethylene, propylene or butene, and other monomer, such as vinyl acetate, ethyl acrylate or ethyl methacrylate, and these copolymers as vulcanized or crosslinked. Also preferable are homopolymers of $\alpha$-olefins, such as polyethylene and polypropylene, which are crosslinked.

According to the present invention, the hydrocarbon organic high polymer is used in an amount of 5 to 30 parts by weight per 100 parts by weight of the paraffin. If the amount is less than 5 parts by weight, the resulting composition has reduced flexibility and tends to become brittle, further rendering the paraffin likely to ooze out or melt at temperatures not lower than Tmax. On the other hand, if the amount is in excess of 30 parts by weight, the reduced amount of paraffin decreases the amount of latent thermal energy to be stored in proportion thereto. The high polymer is used preferably in an amount of 10 to 30 parts by weight per 100 parts by weight of the paraffin.

When it is desired to crosslink or vulcanize (these procedures will be referred to collectively as "crosslinking") the hydrocarbon organic high polymer, the polymer is crosslinked while it is being mixed with the paraffin, or after mixing.

The polymer can be crosslinked by any of common methods which include chemical crosslinking, silane crosslinking (water crosslinking) and irradiation crosslinking.

The composition can be subjected to chemical crosslinking using a chemical crosslinking agent which is capable of crosslinking the organic high polymer used.

Examples of useful chemical crosslinking agents include sulfur crosslinking agents which are desirable for the hydrocarbon rubbers (3), p-xylenedioxime and like oxime crosslinking agents for natural rubber, styrene-butadiene copolymer rubber and isobutylene-isoprene rubber, and dicumyl peroxide and like organic peroxide crosslinking agents for natural rubber, ethylene-propylene copolymer rubber, ethylene-propylene-diene terpolymer rubber, ethylene-vinyl acetate copolymer rubber and the like, and the polyolefin polymers (1). The chemical crosslinking agent is used preferably in an amount of about 0.5 to about 20 parts by weight per 100 parts by weight of the organic high polymer.

In the case where the sulfur crosslinking agent is used for the chemical crosslinking, a crosslinking accelerator is usable when so required. Examples of useful crosslinking accelerators are diphenylguanidine and like guanidine accelerators, 2-mercaptobenzothiazole and like thiazole accelerators, and tetramethylthiuram disulfide and like thiuram accelerators. Also usable are aldehyde-amine compounds, aldehyde-ammonia compounds, dithiocarbamate compounds and the like which are usually used as vulcanization accelerators for rubbers. Further usable are zinc oxide and like metal oxides and triethanolamine and like amines. When oximes are used as crosslinking agents, it is desirable to use lead oxide as an auxiliary agent besides sulfur and the above-mentioned vulcanization accelerators.

When organic peroxides are used as crosslinking agents, it is possible to use, besides sulfur, oximes and the vulcanization accelerators, vinyl-tris($\beta$-methoxyethoxy)silane and like silane coupling agents, acrylic ester compounds and the like as auxiliary crosslinking agents.

These crosslinking accelerators, auxiliary crosslinking agents and the like are used in an amount suitable for giving the desired degree of crosslinking, i.e., in an amount usually of about 0 to about 30 parts by weight per 100 parts by weight of the hydrocarbon organic high polymer.

With use of any of the crosslinking agents, the chemical crosslinking is effected by heating the composition at the same temperature for the same period of time as is usually the case with the crosslinking of rubbers and plastics. Accordingly, the composition is heated usually at 100 to 250° C for several minutes to several hours.

For silane crosslinking, hydrolyzable silane compounds and organic peroxides are used.

The silane compound to be used is a compound represented by the formula $RR'SiY_2$ wherein R is a monovalent olefinically unsaturated hydrocarbon group or hydrocarboxy group, Y is a hydrolyzable organic group, and R′ is the group R or group Y. Examples of such silane compounds are vinyltrimethoxysilane, vinyltriethoxysilane, vinylmethyldimethoxysilane and the like. The silane compound is used generally in an amount of 0.05 to 10 parts by weight, especially 0.5 to 5 parts by weight, per 100 parts by weight of the hydrocarbon organic high polymer. The silane compound is grafted to the hydrocarbon organic high polymer by the action of the organic peroxide to be described below and acts to form a crosslinking point between the molecules of the organic high polymer with water.

The organic peroxide to be used is a compound capable of causing the high polymer to produce a free radical at a temperature not lower than the decomposition temperature of the peroxide, especially not lower than 100° C. Examples of such peroxides are dicumyl peroxide, 2,5-dimethyl-2,5-di(tert-butylperoxy)-hexyne-3 and the like. The organic peroxide is used generally in a amount of 0.005 to 2 parts by weight, especially 0.05 to 0.5 part by weight, per 100 parts by weight of the high polymer.

For silane crosslinking, it is also possible to use a condensation catalyst for the silane compound when required. Useful condensation catalysts are those generally known as silanol condensation catalysts, such as dibutyltin dilaurate, stannous acetate, lead naphthenate, zinc caprylate and like salts of carboxylic acids, titanic acid esters, chelate compounds and like organic metal compounds, etc. The condensation catalyst is used in an amount of up to about 0.1 part by weight per 100 parts by weight of the high polymer and has an effect to accelerate the crosslinking reaction with water.

In silane crosslinking, it is necessary to graft the silane compound onto the hydrocarbon organic high polymer prior to the crosslinking. The grafting process is practiced in the following manner.

First, the paraffin, hydrocarbon high polymer, desired additives, silane compound, organic peroxide and the like are premixed together in specified amounts, using two rolls or like usual mixer or by stirring. Since the silane compound is readily vaporizable, it is desirable to add this compound in a closed space, or to directly mix the compound with the other ingredients in an extruder or like closed mixer in the subsequent step.

The premixed composition is then fully agitated for at least 30 seconds in the closed mixer which is maintained at a temperature not lower than the decomposition temperature of the organic peroxide, preferably not lower than 140° C. In this step, the organic peroxide causes the high polymer to produce a radical to graft the silane compound onto the polymer. The organic high polymer is made crosslinkable with water and uniformly mixed with the paraffin, whereby a uniform composition is obtained which can be crosslinked with water. Usable as the closed mixer in this step is a usual one, such as an extruder or two-screw kneader-extruder. The uniform composition thus obtained, or the article prepared by molding the composition into the desired shape can be crosslinked in the presence of a very small amount of water, such as the water contained in the composition or article, or the water in the air, as is the case with usual organic high polymers which can be crosslinked with water, so that there is no need to follow any particular crosslinking procedure. When required, however, accelerated crosslinking may be effected, for example, by immersing the composition or the article in hot water.

For irradiation crosslinking, an auxiliary crosslinking agent is used when required. The auxiliary cross linking agent to be used is any of those generally used, such as triallyl isocyanate, triallyl cyanate, trimethylolpropane, trimethacrylate, diallyl isophthalate and the like. The auxiliary agent is used in an amount of 0.05 to 10 parts by weight, especially 0.5 to 5 parts by weight, per 100 parts by weight of the hydrocarbon high polymer. Generally after the composition has been molded into a storage material of the invention, or before or during molding if possible, the composition is irradiated with radiation, electron rays or the like at a dose of about 5 to about 30 Mrad for crosslinking.

When the latent thermal energy storage material of the present invention is to be crosskinked by any method, the degree of crosskinking is at least 1 wt. %, preferably at least 2 wt. %, in terms of gel fraction ratio as measured according to JIS C 3005.

$$\text{Gel fraction ratio (\%)} = \frac{\text{Weight of gel measured}}{\text{Weight of composition used in measuring}} \times 100$$

When crosslinked to at least 1%, preferably to at least 2%, the material is capable of retaining its shape without melting or dripping even if subjected to temperatures not lower than Tmax of the paraffin used.

According to the present invention, the binder component comprising a hydrocarbon organic high polymer is more preferably the below-mentioned material A as it is or as crosslinked, or material B. In this case, the paraffin and the binder component are highly compatible with each other, so that even if these two components are not mixed together by the mechanical means, the required amount of paraffin (such an amount that 5 to 30 parts by weight of the organic high polymer is present per 100 parts by weight of the paraffin) can be enclosed in the particles of the organic high polymer by the other method.

The composition then obtained or the molded product prepared from the resulting composition is rendered substantially free of the problem of migration of the paraffin and the attendant problem of sticky surface. In the above case, it is of course more preferable to mix the two components together by the mechanical means.

A. Combinations of hydrocarbon rubbers (3) and polyolefin polymers (1)

Examples of useful polyolefin polymers in this case are homopolymers such as polymethylene, polyethylene and polystyrene; copolymers of olefins including copolymers of ethylene as the main monomer and methylene, propylene or butene, and copolymers of propylene as the main monomer and other olefin; and copolymers of an olefin, such as ethylene, propylene or butene, and other monomer, such as vinyl acetate, acrylic acid or methacrylic acid. These polymers are used singly, or at least two of them are used in combination. Among these, especially preferable are those highly crystalline and having a maximum crystal transition temperature (as measured according to JIS K 7121 (Method of Measuring Transition Temperatures of Plastics) and usually corresponding to the melting point) of at least 10° C, preferably at least 20° C, higher than Tmax of the paraffin used. It is especially desirable that the transition temperature of these crystalline polyolefins be sufficiently higher than Tmax of the paraffin used when the storage material is to be used for a regenerator or like device wherein the material serves as a heat source, for example, for heating floors and which is equipped with a temperature controller. For example, when Tmax of the paraffin is 46° C, the transition temperature of the crystalline polyolefin is at least 60° C, preferably at least 80° C, more preferably at least 100° C. When used in combination with the hydrocarbon rubber, the crystalline poly olefin permits the storage material to effectively exhibit shape retentivity along with suitable flexibility, further permitting the resulting composition to be made into sheets which are not brittle, are free of cracking and retain satisfactory shape retentivity. The paraffin and the binder component comprising the above combination are mixed together in such proportions that 1 to 20 parts by weight, preferably 5 to 15 parts by weight, of the hydrocarbon rubber, and 1 to 20 parts by weight, preferably 5 to 15 parts by weight, of the polyolefin polymer are used per 100 parts by weight of the paraffin. In this mixture, the storage material can be in a non-crosslinked state but is present preferably as crosslinked by a suitable method, such as chemical crosslinking, water crosslinking or irradiation crosslinking mentioned above, especially by water crosslinking, to at least 1 wt. %, preferably at least 2 wt. % in terms of gel fraction ratio.

B. Thermoplastic elastomers (2)

Among the elastomers (2) already mentioned, especially preferable are those exhibiting rubber elasticity at temperatures at least not higher than Tmax of the paraffin to be used. These elastomers have rubber elasticity at temperatures of up to Tmax and are therefore capable of satifactorily supporting the paraffin as suitably enclosed therein, with the result that the mixture is easy to handle, resistant to cracking and easy to make into sheets or plates. Since the elastomers retain rubber elasticity also at temperatures higher than Tmax, the storage material of the invention will not melt or drip.

The present invention can be practiced in various modified modes as will be described below. In the case where the binder component A or B is mixed with a paraffin without employing the mechanical means, the invention can be practiced also in the modified modes.

In addition to the foregoing components, various additives can be incorporated into the material apparatus of the direct heat exchange type, a specific gravity adjusting material may be admixed with the storage material to thereby give the storage material the same specific gravity as the heat medium for use in the apparatus. The storage material can then be free of problems such as floating or settling. This effects efficient heat exchange between the storage material and the heat medium, consequently imparting to the storage material greatly improved properties to store and release heat. Thus, the adjustment of specific gravity is very useful for the recovery of heat especially from low-temperature energy sources with a temperature of up to 100° C. Materials of high specific gravity are used as specific gravity adjusting materials when the heat medium is greater than the present storage material in specific gravity. Otherwise, materials of low specific gravity are conversely used.

Useful materials of high specific gravity are those of at least 1, preferably about 2 to about 15, in specific gravity. Examples of preferred materials are metals, metal oxides, inorganic fillers, etc., more specifically, metals such as finely divided iron and lead, metal oxides such as $ZnO$, $TiO$ and $PbO$, and inorganic fillers such as talc, clay, silica, calcium carbonate and glass. Examples of useful materials of low specific gravity are gases (generally used for blowing), balloons such as shirasu balloons, expanded materials, etch. The composition comprising the paraffin and the organic high polymeric binder component is generally about 0.8 to about 1.0 in specific gravity, so that a material of high specific gravity is usually incorporated into the composition. The specific gravity adjusting material is used in a suitable amount so as to give the storage material approximately the same specific gravity as the particular kind of heat medium used. It is also possible to cover the surface of the adjusting material with foil or the like.

In the case where the storage material of the present invention is heated at a relatively high temperature as when it is used for floor heating systems of the heat storage type, it is desirable that the storage material have a dropping point of at least 80° C, preferably at least 100° C, as measured according to JIS K 2220, "Dropping Point Test Method, Section 5.4". When required, the dropping point of the present storage material can be raised by adding a dropping point improving agent. Such improving agents to be used are those capable of raising the dropping point of the present storage material, preferably those capable of raising the dropping point of the composition of paraffin and binder component by at least 5° C, more preferably by 10° C. In other words, useful dropping point improving agents are those having a melting point or softening point of at least 80° C, preferably at least 100° C. (From the viewpoint of the kneadability of the components to be made into the storage material of the present invention, it is desirable to use dropping point improving agents which are below 200° C, preferably below 180° C, in melting point or softening point.)

Examples of such dropping point improving agents are polyethylene waxes having a molecular weight of 800 to 6000; magnesium stearate, aluminum stearate, calcium stearate and the like, i.e., metal soaps of a fatty acid and a metal such as Li, Mg, Al, Ca, Ba, Zn, Cd or Pd; methylenebis(stearamide), ethylenebis-

(oleylamide), ethylenebis(stearamide) and like fatty acid amides (amide waxes); silica, clay and like inorganic fillers; polyurea and like reactive dropping point improving agents; etc. These improving agents are used in an amount of about 1 to about 10 parts by weight per 100 parts by weight of the composition of paraffin and hydrocarbon high polymeric binder component.

It is desired that the present storage material have sufficient mechanical strength generally when in shape for use. Satisfactory mechanical strength makes it easy for the storage material to receive energy from outside for storage and to retain the initial shape at a high temperature resulting from the storage, and is also advantageous when the storage material is used as a building material. In the case where the storage material is to be used for floor heating systems of the heat storage type utilizing midnight electric power, the storage material, if having high mechanical strength, is serviceable free of problems such as deformation due to gravity and can be installed efficiently in a limited space in a desired shape or arrangement.

For this purpose, improved mechanical strength can be imparted to the present storage material with use of reinforcing materials when so required. Examples of useful reinforcing materials are inorganic fibers or wires such as glass fiber, ceramic fiber, rock wool, carbon fiber, metal fibers and metal wires; synthetic or natural fibers such as polyamide, polyester, phenolic resin, hemp, cotton, pulp and jute fibers; etc. These fibers are, for example, about 1 to about 1000 $\mu$m in outside diameter, and are cut to short lengths of about 10 to about 1000 in terms of aspect ratio (ratio of length to outside diameter) and mixed with the composition. Alternatively, they are used in the form of strings, wires, nonwoven fabric, usual fabric, netting or the like. In the case where the storage material of the invention is a plate or sheet, it is generally desirable to use a fabric, nonwoven fabric or netting of reinforcing material in the form of at least one layer as incorporated in the storage material. When the present storage material is a thin or thick elongated body, it is desirable to use a string, wire or the like of reinforcing material as incorporated in the body concentrically therewith. When the composition of paraffin and organic high polymeric binder component is in the form of a plate, it is desirable to reinforce the plate by providing metal netting on one surface, preferably on each surface, of the plate. The composition constituting the storage material of the invention has high moldability and can therefore be molded, with or without crosslinking, into sheets, rods, honeycombs or tubes, or in any of various other forms. The presence of the fibrous reinforcing material as cut to short lengths is generally effective for the present storage material prepared in any shape, while it is also desirable to use strings, wires, fabric, nonwoven fabric or netting of reinforcing material in combination with the fibrous material.

The composition of the invention prepared by mechanical mixing is molded as it is or as slightly cooled. The composition may be molded into sheets or plates as desired by being poured into molds. Since the present composition solidifies at a temperature below Tmax of the paraffin used, the composition is alternatively made into blocks, then pelletized and thereafter molded to the desired shape using a usual molding machine such as press molding machine, extruder or injection molding machine. The composition may be applied to a film, cloth, fiber or the like as by coating or impregnation to obtain a sheet or plate. The composition can be packed into a polyethylene or like bag and made into a sheet or plate during the subsequent cooling step.

It is recommended to use the present storage material as expanded if a long period of time needed to store energy will not pose any substantial problem but when it is required to use the storage material with moderate release of heat over a prolonged period of time. The storage material is expanded while or after the material is molded. For example, the material may be expanded during the step of extrusion, press molding or injection molding, or the material as molded can be expanded by heating.

The material may be expanded by any desired method, for example, by a chemical method using a decomposable blowing agent such as sodium bicarbonate, N,N'-dinitrosopentamethylenetetramine, azodicarbonamide, azobisisobutyronitrile, P,P'-oxybisbenzenesulfonyl hydrazide or toluenesulfonyl hydrazide, or by a physical method using an expandable blowing agent such as a Freon, air, nitrogen, carbon dioxide or water. Although there is no particular need to effect uniform expansion, it is also desirable to expand the material uniformly using a known nucleating agent in combination with the blowing agent.

Although the degree of expansion (the ratio in percentage of the void portion in the expanded material in volume) of the storage material is variable with the contemplated use of the storage material, a considerable effect to delay the release of heat can be achieved even by a low degree of expansion of about 5%. Generally, it is suitable that the degree of expansion be about 10 to about 90%.

To obtain a satisfactory expanded molded product, it is generally desirable to crosslink the composition. The composition can be crosslinked by any of the aforementioned methods, such as chemical crosslinking, silane crosslinking and irradiation crosslinking, before, during or after the molding step or expansion step. Regardless of the method used for crosslinking the storage material, the degree of crosslinking (apparent gel fraction ratio of the whole composition) as determined according to JIS C 3005 is preferably of at least 1 wt. %, more preferably at least 2 wt. %. When crosslinked to at least 1% or preferably to at least 2%, the storage material will not melt or drip but retains its shape even when subjected to a temperature not lower than Tmax of the paraffin used.

While the storage material of the present invention is usable, as a rule, in any of the states or modes in which conventional heat storage materials of the same type are used, it is especially desirable to prepare the storage material in the form of a sheet, cover the sheet with a protective film, for example, of polyethylene, polypropylene, polyester or the like, and further provide an isothermal layer of aluminum or like metal foil over the protective cover. The sheet may be covered with a laminate of such a film and aluminum or like metal foil.

In addition to the foregoing components, various additives can be incorporated into the composition of the present invention. These additives include, for example, aging preventing agent, antioxidant, coloring agent, pigment and antistatic agent; fungi-proof agent, flame retardant and rodent repellent which may be used for some uses; and finely divided metals, metal fibers, metal oxides, carbon and carbon fiber for giving an improved heat transfer effect.

EXAMPLES

The present invention will be described in greater detail with reference to the following examples and comparative examples, in which the parts and percentages are all by weight unless otherwise specified.

Comparative Example 1

One hundred parts of high-density polyethylene (0.945 in density, 0.4 in MI), 2 parts of vinyltrimethoxysilane and 0.09 part of dicumyl peroxide were premixed together in a closed container. The mixture was fed to an extruder (28 in L/D, 30 mm in cylinder diameter) adjusted to a cylinder temperature of 200° C and extruded at a screw speed of 60 r.p.m. to obtain silane-grafted polyethylene, which was then made into pellets, about 3 mm in size. The pelletized polyethylene was thereafter immersed in water at 70° C for 24 hours for crosslinking to obtain crosslinked polyethylene pellets (62% in gel fraction ratio). The pellets were immersed for 5 hours in a bath of paraffin (135° F paraffin) having a melting point of 58° C and maintained at a temperature of 140° C to cause the paraffin to penetrate into and impregnate the pellets. The pellets were then withdrawn from the bath, and the paraffin adhering to the surfaces of pellets was immediately dissolved and removed with petroleum benzine to obtain dry paraffin-impregnated crosslinked polyethylene pellets. The pellets had a paraffin content of 79.3% (26 parts of crosslinked polyethylene per 100 parts of paraffin), hence full impregnation. However, when tested for exudation by the following method, the impregnated polyethylene was evaluated as "poor" due to paraffin exudate.

Exudation Test

A sample is maintained at 25° C for 60 minutes, then heated to a temperature 20° C higher than the melting point of the paraffin over a period of 30 minutes, maintained at the same temperature for 60 minutes, and thereafter cooled to 25° C again over a period of 60 minutes. This heat cycle is repeated four times. When the sample is heated fourth time, the surface thereof is checked for exudation of the paraffin. When found to be free from any exudate and dry, the sample is evaluated as "excellent." If slight exudation of paraffin is found to make the surface somewhat sticky, but when the sample can be generally regarded as dry, the sample is evaluated as "good." If the surface is found to be wet owing to the exudation of paraffin, the sample is evaluated as "poor."

Example 1

Twenty-six parts of the same uncrosslinked high-density polyethylene as used in Comparative Example 1 and 100 parts of 135° F paraffin were mixed and kneaded together into a uniform composition using a twin roll adjusted to a temperature of 130° C. The composition was then made into pellets, about 3 mm in mean size. The pelletized composition (126 parts), 2.4 parts of vinyltrimethoxysilane and 0.18 part of dicumyl peroxide were premixed together in a closed container. The mixture was extruded by the same extruder under the same conditions as in Comparative Example 1 and poured into a mold to obtain a plate, 3 mm in thickness. The plate was thereafter immersed in water at 70° C for 24 hours for crosslinking to prepare a platelike energy storate material (10% in gel fraction ratio). When subjected to the above exudation test, the storage material was evaluated as excellent.

Example 2

The same proportions of the same ingredients as in Example 1, i.e., 100 parts of paraffin, 26 parts of high-density polyethylene, 2.4 parts of vinyltrimethoxysilane and 0.18 part of dicumyl peroxide, were kneaded and extruded by a two-screw extruder maintained at a barrel temperature of 200° C and then poured into a mold to prepare an energy storage material in the form of a plate and having a thickness of 3 mm. When subjected to the exudation test, the storage material was evaluated as excellent.

Comparative Example 2

Pellets (about 3 mm in mean size) of ethylene-vinyl acetate copolymer (25% in vinyl acetate content, 3 in MI) were immersed for 24 hours in a bath of paraffin (115° F paraffin) having a melting point of 47° C and maintained at a temperature of 60° C to cause the paraffin to penetrate into and impregnate the pellets. The pellets were then withdrawn from the bath, and the paraffin adhering to the surfaces of the pellets was immediately dissolved and removed with petroleum benzine to obtain dry paraffin-impregnated ethylene-vinyl acetate copolymer pellets. The pellets had a paraffin content of 56.5% (77 parts of ethylene-vinyl acetate copolymer per 100 parts of paraffin), hence insufficient impregnation. The pelletized copolymer was found to be poor by the exudation test to be described below.

Example 3

The same paraffin (100 parts) and 25 parts of the same ethylene-vinyl acetate copolymer as used in Comparative Example 2 were placed into a mixing container maintained at 130° C and thoroughly agitated and mixed together into a uniform composition, which was then poured into a mold to obtain an energy storage material in the form of a plate and 3 mm in thickness. The storage material was found to be excellent by the exudation test.

Example 4

A plate, 3 mm in thickness, was prepared by the same method under the same conditions as in Example 3 with the exception of using low-density polyethylene (0.920 in density, 0.4 in MI) in place of the ethylene-vinyl acetate copolymer used in Example 3. The plate was found to be excellent by the exudation test.

Examples 5-16, Comparative Example 3

To prepare each of the compositions listed in Tables 1 to 3 (the proportions listed are each in the number of parts, the same as in the tables to follow), a hot bath of a paraffin, such as paraffin, microcrystalline wax or stearic acid, was prepared which had a temperature of 130 to 180° C. A hydrocarbon organic high polymer and other ingredient were placed into the bath and mixed therewith by stirring for about 60 to 120 minutes to obtain a uniform molten composition. The molten composition obtained was then poured into a mold and cooled in the air to prepare a plate measuring 130 mm x 110 mm x 2 mm. Each of the platelike storage materials prepared in the respective examples was checked for the properties listed in Tables 1 to 3 by the following methods.

Maximum heat storage tempeature

The storage material of the present invention exhibits heat storage characteristics reflecting the crystal transition temperature characteristics of the paraffin used. The maximum heat storage temperature means a temperature at which the material stores or absorbs heat most greatly and which is in coincidence with or approximate to Tmax or melting point of the paraffin in many cases. This temperature is measured by a DSC device according to JIS K 7121.

Shape retentivity

Five 10-mm-square pieces are cut out from the 2-mm-thick plate and superposed one over another to a height of 10 mm (into a 10-mm cube) to obtain a test sample. The sample is heated in an oven maintained at the temperature indicated for 120 minutes and thereafter checked for changes with the unaided eye. When retaining the original shape generally, the sample is evaluated as "good." If deforming or melting, the sample is evaluated as "poor."

Exudation

The storage material is enclosed in a bag of polyethylene film, then allowed to stand at a temperature 20° C higher than the maximum heat storage temperature for 24 hours and thereafter checked for the separation of paraffin with the unaided eye. When almost free of changes, the material is evaluated as "good." If apparent separation is found, the material is evaluated as "poor."

Examples 17-20

The ingredients given in Table 4 for each of the compositions listed were premixed together in a closed container, then fed to a two-screw kneader-extruder adjusted to a cylinder temperature of 200° C and extruded at a screw speed of 40 r.p.m. The resulting mixture was poured into a mold and cooled with water to obtain a storage material in the form of a plate with a thickness of 2 mm. In Example 17, the paraffin and hydrocarbon polymer were mixed together with a twin roll and made into chips before premixing. In the other examples, the ingredients were weighed out in the proportions listed and thereafter premixed together entirely.

The degree of crosslinking was measured according to JIS C 3005 by extraction at the boiling point of xylene serving as a solvent.

Examples 21-24

The ingredients given in Table 5 for each of the compositions listed were mixed and kneaded together with a twin roll and pressed for crosslinking to obtain a storage material, 130 mm x 110 mm x 2 mm. This press crosslinking operation was performed at 150° C for 30 minutes in Example 21, or 165° C for 30 minutes in Examples 22 to 24.

Examples 25-30

The ingredients given in Table 6 for each composition listed were thoroughly mixed together and then molded into a storage material, 5 mm in thickness. For this procedure, the ingredients were fully agitated and mixed together in a container heated at 130 to 180° C, and the molten mixture was poured into a mold for molding in Examples 25, 27, 28 and 30. In Examples 26 and 29, the ingredients were mixed together at room temperature with rolls and thereafter press-molded at 165° C for 30 minutes.

The materials prepared in the examples were tested for the characteristics shown in Table 6 by the foregoing corresponding methods except that the DSC device was used for measuring the maximum heat storage temperature, heat storage temperature range, maximum heat release temperature and heat release temperature range. These characteristics represent the heat storage and heat release characteristics of the storage material reflecting the crystal transition temperature characteristics of the paraffin used. The term "maximum heat storage temperature" refers to a temperature at which the material stores or absorbs heat most greatly. "Heat storage temperature range" includes other temperature, if any besides the maximum heat storage temperature, at which the material also stores heat remarkably, or refers to a temperature range over which the material stores heat. Similarly, heat release characteristics are referred to by like terms, i.e., maximum heat release temperature and heat release temperature range.

Examples 31-33

In the same manner as in Example 5, the ingredients given in Table 7 for each composition listed were mixed together and poured into a mold to obtain a storage material, 2 mm in thickness. The waxes marked with *6 to *8 in the same table were used as dropping point improving agents. The dropping point of the storage material was measured according to JIS K 2220, "Dropping Point Test Method, Section 5.4".

12

Examples 34-36

Table 8 shows the compositions used and the characteristics achieved.

In Example 34, the ingredients were kneaded together with full stirring in a container heated at 150° C, then poured into a mold to form layers between eight pieces of glass cloth and molded into a storage material in the form of a plate, 15 mm in thickness. The material was tested for shape retentivity by the following method.

Shape retentivity

A sample of the material, 10 cm x 10 cm, is placed on a metal net, heated in an atmosphere with a temperature 20° C higher than the maximum heat storage temperature for 120 minutes, and thereafter checked with the unaided eye. When retaining the original shape generally, the material is evaluated as "good." If melting or dripping, the material is evaluated as "poor."

In Example 35, the paraffin listed was first heated at 150° C in a container and melted. Polyethylene, EPDM and glass fiber cut to a short length and serving as a reinforcing material were added to the melt, followed by stirring for 100 minutes to prepare a uniform molten mixture, which was then poured into a mold to obtain a storage material, 15 mm in thickness.

The material was tested for shape retentivity by the following method.

Shape retentivity

A strip of the storage material, 20 mm in width and 20 cm in length, is held suspended in an oven at 80° C for 120 minutes and then checked for the retentivity of the original shape. The material was evaluated as "good" when free of changes, or as "poor" when drooping markedly.

In Example 36, the ingredients were kneaded and mixed together by a two-screw kneader-extruder maintained at a cylinder temperature of 200° C, and made into a storage material in the form of a rod with an outside diameter of 5 mm and having incorporated therein SUS wire having an outside diameter of 1 mm and serving as a reinforcing core. The material was then immersed in hot water for crosslinking and thereafter tested for characteristics. The shape retentivity was evaluated by the following method.

Shape retentivity

The storage material is held supported at its opposite ends within an oven at a temperature 20° C higher than the maximum heat storage temperature for 120 minutes and thereafter checked for deformation or dropping with the unaided eye. The material is evaluated as "good" when almost free of any deformation.

Examples 37-39

The ingredients given in Table 9 for each composition were mechanically mixed together into a uniform composition, which was then crosslinked and expanded by the method listed under the conditions specified to obtain a storage material.

In Example 37, the composition was crosslinked, expanded and molded at the same time by press molding. In the case of Examples 38 and 39, the composition was crosslinked after expansion and molding. In each of Examples, the heat release time was measured by the following method.

Heat release time

The storage material, measuring 300 mm x 300 mm x 20 mm, is enclosed in a bag of 0.1-mm-thick polyethylene sheet. (In Examples 38 and 39, ten superposed 2-mm-thick plates of storage material are used.) The bag is further enclosed with an aluminum laminate composed of three layers of polyethylene, aluminum and polyester (30 $\mu$m/25 $\mu$m/25 $\mu$m) by heat sealing to prepare a heat storage plate.

The plate is heated in an oven at a temperature 10°C higher than the maximum heat storage temperature to cause the plate to fully store heat, and thereafter allowed to stand at room temperature (20° C) to measure the time taken for the heat storage temperature to drop to a level 20° C lower than the maximum heat storage temperature.

Examples 40-42

The ingredients including a specific gravity adjusting material, such as PbO, ZnO or glass fiber, and listed in Table 10 for each composition were mechanically mixed together uniformly in Example 40 then press-molded, in Example 41 press-molded to crosslink and in Example 42 subjected to water crosslinking in hot water to obtain a heat storage material in the form of pellets (approximately 5-mm cubes).

The storage material thus prepared in each of Examples 40-42 was 1.00 in specific gravity at room temperature and was equal to water in specific gravity. The storage material was placed into a heat storage tank of the direct heat exchange type which was equipped with a stirrer and in which water was used as a heat medium, in an amount corresponding to about one half of the tank capacity. The material was allowed to store heat and release heat repeatedly. Consequently the material repeated satisfactory heat storage-heat release cycles while uniformly moving through the water without remaining locally in the water or blocking.

Table 1

|  |  | Ex. 5 | Ex. 6 | Ex. 7 | Ex. 8 | Ex.9 | Comp. Ex. 3 |
|---|---|---|---|---|---|---|---|
| Composition |  |  |  |  |  |  |  |
| Paraffin | *1 | 100 | 100 | – | 100 | – | – |
| Microcrystalline wax | *2 | – | – | 100 | – | – | 100 |
| Stearic acid |  | – | – | – | – | 100 | – |
| Styrene thermoplastic elastomer | *3 | 20 | 10 | 25 | – | 15 | 3 |
| Olefin thermoplastic elastomer | *4 | – | – | – | 20 | – | – |
| Antioxidant | *5 | 1 | – | – | 1 | 1 | – |
| Characteristics |  |  |  |  |  |  |  |
| Maximum heat storage temperature ($^{\circ}$C) |  | 47 | 47 | 67 | 47 | 60 | 67 |
| Amount of heat storage (kcal/kg) |  | 39 | 42 | 39 | 38 | 41 | 46 |
| Flexibility (20$^{\circ}$ C) |  | Good | Good | Good | Good | Good | Poor |
| Shape retentivity (80$^{\circ}$ C) |  | Good | Good | Good | Good | Good | Poor |
| Shape retentivity (100$^{\circ}$ C) |  | Good | Good | Good | Good | Good | Poor |
| Exudation |  | Good | Good | Good | Good | Good | – |

EP 0 412 021 B1

Notes to Table 1

*1  115$^O$ F paraffin.

*2  Brand name: SUN NOC N, product of Ouchi Shinko Chemical Industrial Co., Ltd.

*3  Styrene-ethylenebutylene-styrene block copolymer, brand name: KRATON G1650, product of Shell Chemical.

*4  Brand name: SANTOPRENE 201-64, product of Mitsubishi Monsanto Chemical Co., Ltd.

*5  Brand name: IRGANOX 1010, product of Ciba-Geigy.

EP 0 412 021 B1

Table 2

| | | Ex. 10 | Ex. 11 | Ex. 12 | Ex. 13 |
|---|---|---|---|---|---|
| Composition | | | | | |
| Paraffin | *1 | 100 | – | 100 | 100 |
| Microcrystalline wax | *2 | – | 100 | – | – |
| EPDM | *3 | 15 | 15 | 10 | – |
| Ethylene-vinyl acetate copolymer rubber | *4 | – | – | – | 15 |
| LDPE | *5 | 10 | – | – | – |
| HDPE | *6 | – | 5 | – | – |
| L-LDPE | *7 | – | – | 10 | – |
| EEA | *8 | – | – | – | 15 |
| Antioxidant | *9 | 1 | 1 | 1 | 1 |
| Characteristics | | | | | |
| Maximum heat storage temperature ($^\circ$ C) | | 47 | 67 | 47 | 47 |
| Amount of heat storage (kcal/kg) | | 38 | 41 | 40 | 36 |
| Flexibility ($20^\circ$ C) | | Good | Good | Good | Good |
| Shape retentivity ($80^\circ$ C) | | Good | Good | Good | Good |
| Exudation | | Good | Good | Good | Good |

*1  $115^\circ$ F paraffin.

*2  Brand name: SUN NOC N, product of Ouchi Shinko Chemical Industrial Co., Ltd.

*3  Brand name: ESPRENE 301, product of Sumitomo Chemical Co., Ltd.

*4  Brand name: LEVAPREN 450, product of Bayer.

*5  Brand name: HE-30, product of Mitsubishi Petrochemical Co., Ltd.

17

*6   Brand name: HZ5100, product of Mitsui Petro-chemical Industries, Ltd.

*7   Brand name: UZ3520L, product of the same.

*8   Brand name: DPDJ8026, product of Nippon Unicar Co., Ltd.

*9   Brand name: IRGANOX 1010, product of Ciba-Geigy.

Table 3

| Composition | Ex. 14 | Ex. 15 | Ex. 16 |
|---|---|---|---|
| Paraffin *1 | 100 | 100 | 100 |
| EVA-1 *2 | 20 | - | 5 |
| EB *3 | - | 25 | - |
| Cl-PE *4 | - | - | 10 |
| Antioxidant-A *5 | - | - | 1 |
| Antioxidant-B *6 | 1 | 1 | - |
| Characteristics | | | |
| Maximum heat storage temperature (° C) | 47 | 47 | 67 |
| Amount of heat storage (kcal/kg) | 40 | 38 | 41 |
| Flexibility | Good | Good | Good |
| Shape retentivity | Good | Good | Good |
| Exudation | Good | Good | Good |
| Processability | Good | Good | Good |

*1 115° F paraffin.

*2 Ethylene-vinyl acetate copolymer, density: 0.95 g/cm$^3$, MFR: 3 g/10 min, m.p.: 85° C, degree of crystallinity: 18%, VA content: 25%.

*3 Ethylene-butene-1 copolymer, density: 0.88 g/cm$^3$, MFR: 4 g/10 min, m.p. 90° C, degree of crystallinity: 15%, butene-1 content: 5%, olefin content: 100%.

*4 Chlorinated polyethylene, specific gravity: 1.1, MFR: 5 g/10 min (180° C, 21.6 kg), degree of crystallinity: 15%, chlorine content: 23%.

*5 Polymerized trimethyl dihydroquinoline.

*6 Brand name: IRGANOX 1010, product of Ciba-Geigy.

EP 0 412 021 B1

Table 4

| | | Ex. 17 | Ex. 18 | Ex. 19 | Ex. 20 |
|---|---|---|---|---|---|
| Composition | | | | | |
| Paraffin | *1 | 100 | – | 100 | 100 |
| Microcrystalline wax | *2 | – | 100 | – | – |
| Ethylene-propylene copolymer | *3 | 20 | – | – | 10 |
| Ethylene-propylene terpolymer | *4 | – | 15 | – | – |
| Ethylene-vinyl acetate copolymer | *5 | – | – | 20 | – |
| Polyethylene | *6 | – | – | – | – |
| Vinylmethoxysilane | | 2.4 | – | 1.5 | 3.0 |
| Vinylethoxysilane | | – | 2.0 | – | – |
| Dicumyl peroxide | | 0.18 | 0.10 | 0.15 | 0.20 |
| Dibutyltin dilaurate | | 0.1 | 0.05 | – | 0.1 |
| Antioxidant | *7 | 0.3 | 0.3 | 0.3 | 0.3 |
| Characteristics | | | | | |
| Maximum heat storage temperature ($^{\circ}$ C) | | 47 | 67 | 47 | 47 |
| Amount of heat storage (kcal/kg) | | 39 | 42 | 39 | 39 |
| Flexibility (20$^{\circ}$ C) | | Good | Good | Good | Good |
| Shape retentivity (100$^{\circ}$ C) | | Good | Good | Good | Good |
| Exudation | | Good | Good | Good | Good |
| Degree of crosslinking (%) | | 11 | 5 | 9 | 10 |

20

Notes to Table 4

*1   115$^{\circ}$ F paraffin.

*2   Brand name: SUN NOC N, product of Ouchi Shinko
     Chemical Industrial Co., Ltd.

*3   Brand name: EPO2P, product of Japan Synthetic
     Rubber Co., Ltd.

*4   Brand name: ESPRENE 301, product of Sumitomo
     Chemical Co., Ltd.

*5   Brand name: EVA 25K, product of Mitsubishi Petro-
     Chemical Co., Ltd.

*6   Brand name: UZ3520L, product of Mitsui Petro-
     chemical Industries, Ltd.

*7   Polymerized trimethyl dihydroquinoline.

Table 5

| | | Ex. 21 | Ex. 22 | Ex. 23 | Ex. 24 |
|---|---|---|---|---|---|
| Composition | | | | | |
| Paraffin | *1 | 100 | 100 | 100 | – |
| Microcrystalline wax | *2 | – | – | – | 100 |
| Natural rubber | *3 | 20 | – | – | – |
| EPDM | *4 | – | 20 | 10 | 15 |
| Sulfur | | 0.6 | 0.2 | 0.1 | 0.2 |
| Dicumyl peroxide | | – | 1.5 | 0.8 | 1.5 |
| Dibenzothiazyl disulfide | | 0.3 | – | – | – |
| ZnO | | 2 | 2 | 1 | 2 |
| Antioxidant | *5 | 1 | 1 | 1 | 1 |
| Characteristics | | | | | |
| Maximum heat storage temperature ($^{\circ}$ C) | | 47 | 47 | 47 | 66 |
| Amount of heat storage (kcal/kg) | | 39 | 39 | 41 | 40 |
| Flexibility ($20^{\circ}$ C) | | Good | Good | Good | Good |
| Shape retentivity ($80^{\circ}$ C) | | Good | Good | Good | Good |
| Exudation ($80^{\circ}$ C) | | Good | Good | Good | Good |
| Degree of crosslinking (%) | | 12 | 10 | 3 | 6 |

*1  $115^{\circ}$ F paraffin.
*2  Brand name: SUN NOC N, product of Ouchi Shinko
     Chemical Industrial Co., Ltd.
*3  SMR-5L.
*4  Brand name: ESPRENE 301.
*5  Polymerized trimethyl dihydroquinoline.

Table 6

| | | Ex. 25 | Ex. 26 | Ex. 27 | Ex. 28 | Ex. 29 | Ex. 30 |
|---|---|---|---|---|---|---|---|
| **Composition** | | | | | | | |
| Paraffin A | *1 | 50 | – | – | – | – | – |
| Paraffin B | *2 | 50 | 64 | 67 | 67 | 50 | 34 |
| Paraffin C | *3 | – | 36 | – | – | – | – |
| Stearic acid | *4 | – | – | 33 | – | – | 33 |
| Polyethylene glycol | *5 | – | – | – | 33 | 50 | 33 |
| Thermoplastic elastomer | *6 | 20 | – | 20 | 10 | – | – |
| Ethylene-vinyl acetate copolymer | *7 | – | – | – | 10 | – | 20 |
| EPDM | | – | 10 | 5 | – | 20 | 10 |
| Dicumyl peroxide | | – | 1 | – | – | 2 | – |
| Antioxide A | *8 | – | 0.3 | – | – | 0.3 | 0.3 |
| Antioxide B | *9 | 0.3 | – | 0.3 | 0.3 | – | – |
| Sulfur | | – | 0.1 | – | – | 0.2 | – |
| ZnO | | – | 2 | – | – | 2 | – |
| **Characteristics** | | | | | | | |
| Maximum heat storage temperature (° C) | | 52 | 45 | 45 | 48 | 48 | 45 |
| Heat storage temperature range (° C) | | – | 26–45 | – | – | – | 45–54 |
| Maximum heat release temperature (° C) | | 50 | 43 | 43 | 39 | 36 | 42 |
| Heat release temperature range (° C) | | – | 25–43 | – | – | – | 42–46 |
| Amount of heat storage (kcal/kg) | | 47 | 35 | 42 | 40 | 40 | 39 |
| Flexibility | | Good | Good | Good | Good | Good | Good |
| Shape retentivity | | Good | Good | Good | Good | Good | Good |
| Exudation | | Good | Good | Good | Good | Good | Good |

Notes to Table 6

*1  135° F paraffin.                          *7  (VA: 25%, MFR: 3 g/10
*2  115° F paraffin.                               min, degree of
*3  Liquid paraffin.                               crystallinity: 18%)
*4  Stearic acid for rubbers.  *8  Polymerized trimethyl
*5  Brand name: PEG 1540,            dihydroquinoline.
    product of Nippon Oils &   *9  Brand name: IRGANOX
    Fats Co., Ltd.                   1010, product of Ciba-
*6  Styrene -ethylenebutylene-       Geigy.
    styrene block copolymer.

Table 7

|  |  | Ex. 31 | Ex. 32 | Ex. 33 |
|---|---|---|---|---|
| Composition |  |  |  |  |
| Paraffin | *1 | 100 | 100 | 100 |
| Thermoplastic elastomer | *2 | 15 | – | – |
| Ethylene-vinyl acetate copolymer | *3 | – | 25 | – |
| Polyethylene | *4 | – | – | 5 |
| EPDM | *5 | – | – | 15 |
| Polyethylene wax-1 | *6 | – | 4 | – |
| Polyethylene wax-2 | *7 | 5 | – | – |
| Amide wax | *8 | – | – | 5 |
| Antioxidant | *9 | 0.5 | 0.5 | 0.5 |
| Characteristics |  |  |  |  |
| Maximum heat storage temperature (° C) |  | 47 | 47 | 47 |
| Amount of heat storage (kcal/kg) |  | 40 | 37 | 39 |
| Flexibility |  | Good | Good | Good |
| Exudation |  | Good | Good | Good |
| Dropping point (° C) |  | 107 | 101 | 117 |

24

Notes to Table 7

*1  115$^{\circ}$ F paraffin.

*2  Styrene-ethylenebutylene-styrene block copolymer.

*3  VA: 10%, density: 0.94 g/cm$^3$, MFR: 2 g/10 min, degree of crystallinity: 18%.

*4  Density: 0.95 g/cm$^3$, MFR: 0.4 g/10 min, degree of crystallinity: 68%.

*5  Ethylene content: 65%, iodine value: 12.

*6  Molecular weight: 4,000, density: 0.98, softening point: 136$^{\circ}$ C.

*7  Molecular weight: 2,000, density: 0.97, softening point: 126$^{\circ}$ C.

*8  Ethylenebis(stearamide).

*9  Brand name: IRGANOX 1010, product of Ciba-Geigy.

Table 8

| | | Ex. 34 | Ex. 35 | Ex. 36 |
|---|---|---|---|---|
| Composition | | | | |
| Paraffin | *1 | 100 | 100 | - |
| Microcrystalline wax | *2 | - | - | 100 |
| Thermoplastic elastomer | *3 | 15 | - | - |
| Polyethylene | *4 | - | 5 | - |
| EPDM | *5 | - | 15 | 15 |
| Ethylene-ethyl acrylate copolymer | *6 | | | 10 |
| Dicumyl peroxide | | - | - | 0.2 |
| Vinyltrimethoxysilane | | - | - | 2.0 |
| Antioxidant | *7 | 1 | 1 | 1 |
| Reinforcing material | | *8 | *9 | *10 |
| Characteristics | | | | |
| Maximum heat storage temperature ($^{\circ}$ C) | | 47 | 47 | 66 |
| Amount of heat storage (kcal/kg) | | 42 | 38 | 38 |
| Degree of crosslinking (%) | | - | - | 14 |
| Flexibility | | Good | Good | Good |
| Shape retentivity | | Good | Good | Good |
| Exudation | | Good | Good | Good |

*1  115$^{\circ}$ F paraffin.

*2  Brand name: SUN NOC N, product of Ouchi Shinko Chemical Industrial Co., Ltd.

*3  Brand name: KRATON G1650, product of Shell Chemical.

*4 Brand name: HZ 5100, product of Mitsui Petro-chemical Industries, Ltd.

*5 Brand name: ESPRENE 301, product of Sumitomo Chemical Co., Ltd.

*6 Ethyl acrylate: 15, density: 0.93 $g/cm^3$, MFR: 1.5 g/10 min, m.p.: 100° C.

*7 Brand name: IRGANOX 1010, product of Ciba-Geigy.

*8 Glass cloth.

*9 Glass fiber cut to short length.

*10 Wire, 1 mm in outside diameter.


Table 9

| | | Ex. 37 | Ex. 38 | Ex. 39 |
|---|---|---|---|---|
| Composition | | | | |
| Paraffin | *1 | 100 | 100 | 100 |
| EPDM | *2 | 15 | 5 | 20 |
| EVA | *3 | – | | |
| EEA | *4 | – | 5 | 20 |
| Sulfur | | 0.2 | – | – |
| ZnO | | 2 | – | – |
| Dicumyl peroxide | | 1.5 | 0.15 | – |
| Vinyltrimethoxysilane | | – | 2 | – |
| Dibutyltin dilaurate | | – | 0.05 | – |
| Triallyl isocyanurate | | – | – | 1.5 |
| Antioxidant A | *5 | 1 | – | – |
| Antioxidant B | *6 | – | 1 | 1 |
| Chemical blowing agent A | *7 | 3 | – | – |
| Chemical blowing agent B | *8 | – | 3 | – |
| Freon gas | | – | – | (Injected) |

Table 9 (continued)

|  | Ex. 37 | Ex. 38 | Ex. 39 |
|---|---|---|---|
| Crosslinking method |  |  |  |
| Chemical crosslinking ($^{\circ}$ C/min) | 165/30 | - | - |
| Silane crosslinking, immersion in hot water ($^{\circ}$ C/hr) | - | 80/24 | - |
| Irradiation crosslinking (Mrad) | - | - | 20 |
| Characteristics |  |  |  |
| Degree of crosslinking (%) | 6 | 4 | 17 |
| Degree of expansion (%) | 38 | 15 | 55 |
| Maximum heat storage temperature ($^{\circ}$ C) | 47 | 47 | 47 |
| Amount of heat storage (kcal/kg) | 41 | 43 | 35 |
| Flexibility | Good | Good | Good |
| Shape retentivity | Good | Good | Good |
| Exudation | Good | Good | Good |
| Heat release time (hr) | 4 | 3 | 5 |

*1  115$^{\circ}$ F paraffin.

*2  Brand name: ESPERENE 301, product of Sumitomo Chemical Co., Ltd.

*3  Brand name: EVA 25K, product of Mitsubishi Petro-chemical Co., Ltd.

*4  Brand name: DPDG 8026, product of Nippon Unicar Co., Ltd.

*5  Polymerized trimethyl dihydroquinoline.

*6  Brand name: IRGANOX 1010, product of Ciba-Geigy.

*7  P,P'-oxybisbenzenesulfonyl hydrazide.

*8  Azodicarbonamide.

Table 10

| Composition | Ex. 40 | Ex. 41 | Ex. 42 |
|---|---|---|---|
| 135° F paraffin | 100 | 100 | 100 |
| Thermoplastic elastomer *1 | 20 | - | - |
| EPDM | - | 10 | - |
| Ethylene-vinyl acetate copolymer *2 | - | 10 | 25 |
| ZnO | 14 | 2 | - |
| Sulfur | - | 0.2 | - |
| Dicumyl peroxide | - | 1.5 | 0.2 |
| Vinyltrimethoxysilane | - | - | 2.4 |
| Antioxidant *3 | 1 | 1 | 1 |
| PbO | - | 13 | 14 |
| Glass fiber | 3 | - | - |
| Characteristics | | | |
| Specific gravity | 1.00 | 1.00 | 1.00 |
| Maximum heat storage temperature (° C) | 57 | 57 | 57 |
| Amount of heat storage (kcal/kg) | 38 | 38 | 37 |
| Degree of crosslinking (%) | - | 10 | 14 |

*1 Styrene-ethylenebutylene-styrene block copolymer.
*2 VA: 25%, density: 0.95 g/cm$^3$, MFR: 3 g/10 min.
*3 Brand name: IRGANOX 1010, product of Ciba-Geigy.

Examples 43 and 44

The ingredients for preparing each of the composition of Example 5 and the composition of Example 37 were mixed together in the same manner as in the example concerned and made into a storage material in the form of a plate and measuring 800 mm x 250 mm x 20 mm by the same procedure. The material was enclosed in a bag of 0.1-mm-thick polyethylene sheet and further enclosed with an aluminum laminate sheet composed of three layers of polyethylene, aluminum and polyester (30 $\mu$m, 25 $\mu$m and 25 $\mu$m in thickness) by heat sealing. Thus heat storage boards were prepared using the composition of Example 5 in Example 43, and the composition of Example 37 in Example 44.

A 100-V, 67-W heater wire was sandwiched between two storage boards of each of Examples 43 and 44 to prepare an assembly, which was then installed between a floor panel and a heat insulating layer provided therebelow to construct a floor heating unit of the heat storage type. The heater wire in the unit was energized for 8 hours and subsequently held unenergized for 16 hours, and this cycle (24 hours) was repeated to continuously measure the temperature of the floor surface. The test thus conducted in each of the examples revealed that the floor was heated to 28° C and thereafter remained at a temperature of 26 to 28° C stably even after the lapse of 24 hours.

Example 45

The ingredients for the composition of Example 14 were mixed together in the same manner as in Example 14 and made into a storage material in the form of a plate and measuring 300 mm x 350 mm x 20 mm. The material was enclosed in a bag of 0.1-mm-thick polyethylene sheet and further enclosed with an aluminum laminate sheet of three layers of polyethylene, aluminum and polyester (30 $\mu$m, 25 $\mu$m and 25 $\mu$m in thickness) by heat sealing. A heat insulating expanded material, about 5 mm in thickness, was placed over both surfaces of the enclosed storage material, and the assembly was placed into a bag to prepare a cushion of the heat storage type. When the cushion was heated in an oven for heat storage and then used as such in an outdoor party, the cushion remained warm and felt comfortable for about 4 hours. The atmospheric temperature was about 10° C. When a heater wire is interposed between layers of the storage material to prepare such a cushion, the cushion can be made to store heat with ease by energizing the wire. In this case, the heater wire may be of the 100-V, 30-W to 50-W class.

29

Advantages of the Invention

The storage material of the present invention has a high level of latent heat of at least 30 kcal/kg, preferably at least 35 kcal/kg, and is greatly improved in respect of melting, dripping, phase separation and bleeding of liquid even at high temperatures close to Tmax or melting point of the paraffin incorporated therein. The material can be prepared in the form of a sheet, which retains suitable flexibility without cracking. Because of these characteristics, the present storage material can be readily placed into use, for example, in floor heating systems of the heat storage type, heat storage tanks, etc., and yet very advantageously assures a long-term operation with safety. The present material is useful also for mats and like household articles and further for heat storage building materials and the like.

## Claims

1. A latent thermal energy storage material obtainable by a process in which 5 to 30 parts by weight of at least one hydrocarbon organic polymer serving as a binder component is mixed uniformly with 100 parts by weight of at least one organic energy storage component having a T max ranging from room temperature to 100°C by mechanical means in a state in which the two components are made flowable and deformable to obtain a uniform composition.

2. A material according to claim 1 wherein the hydrocarbon organic polymer is polyolefins, thermoplastic elastomers or hydrocarbon rubbers.

3. A latent thermal energy storage material obtainable by a process in which 5 to 30 parts by weight of at least one hydrocarbon organic polymer, serving as a binder component and being selected from the group consisting of (1) thermoplastic elastomers and (2) combinations of polyolefins and hydrocarbon rubbers, is mixed uniformly with 100 parts by weight of at least one organic energy storage component having a T max ranging from room temperature to 100°C in a state in which the two components are made flowable and deformable to obtain a uniform composition.

4. A material according to any one of claims 1 to 3, wherein the energy storage component is at least one paraffin.

5. A material according to any one of claims 1 to 4, wherein the uniform composition of the latent thermal energy storage material contains at least an additive such as specific gravity adjusting materials, dropping point improving agents, reinforcing materials, blowing agents and the like.

6. A material according to any one of claims 1 to 5, wherein the uniform composition is in a molded shape.

7. A material according to claim 6, wherein the molded shape is a sheet or plate.

8. A material according to claim 7, wherein the sheet or plate is a coating or an impregnation of a film, cloth, fiber or the like.

9. A material according to claims 7 or 8, wherein the sheet is covered with a protective film and further with an isothermal layer or with laminates thereof.

10. A material according to any one of claims 1 to 9, wherein the latent thermal energy storage material is expanded.

11. A material according to any one of claims 1 to 10, wherein the hydrocarbon organic polymer is crosslinked.

12. Process for preparing a latent thermal energy storage material, according to any one of claims 1 to 11, 5 to 30 parts by weight of at least one hydrocarbon organic polymer serving as a binder component is mixed uniformly with 100 parts by weight of at least one organic energy storage component, having a T max ranging from room temperature to 100°C, optionally together with appropriate additives, by mechanical means in a state in which the two components are made flowable and deformable to obtain a uniform composition.

13. Use of a material according to any one of claims 1 to 11 as heat storage, heat exchange or heat insulating materials.

14. Use of a material according to claim 13, wherein the material is used for household articles or building materials.

**Patentansprüche**

1. Material zur Speicherung latenter Wärmeenergie, erhältlich durch ein Verfahren, bei dem 5 bis 30 Gewichtsteile mindestens eines organischen Kohlenwasserstoffpolymers, das als Bindemittelbestandteil dient, gleichförmig mit 100 Gewichtsteilen mindestens eines organischen Energiespeicherbestandteils mit einer $T_{max}$ im Bereich von Raumtemperatur bis zu 100°C durch mechanische Mittel in einem Zustand vermischt werden, bei dem die zwei Bestandteile fließfähig und verformbar gemacht werden, um eine gleichförmige Zusammensetzung zu erhalten.

2. Material nach Anspruch 1, wobei das organische Kohlenwasserstoffpolymer Polyolefine, thermoplastische Elastomere oder Kohlenwasserstoffgummis ist.

3. Speichermaterial für latente Wärmeenergie, erhältlich durch ein Verfahren, in dem 5 bis 30 Gewichtsteile mindestens eines organischen Kohlenwasserstoffpolymers, das als Bindemittelbestandteil dient und aus der Gruppe bestehend aus (1) thermoplastische Elastomere und (2) Kombinationen aus Polyolefinen und Kohlenwasserstoffgummis ausgewählt ist, gleichförmig mit 100 Gewichtsteilen mindestens eines organischen Energiespeicherbestandteils mit einer $T_{max}$ im Bereich von Raumtemperatur bis zu 100°C in einem Zustand vermischt werden, bei dem die zwei Bestandteile fließfähig und verformbar gemacht werden, um eine gleichförmige Zusammensetzung zu erhalten.

4. Material nach einem der Ansprüche 1 bis 3, wobei der Energiespeicherbestandteil mindestens ein Parafin ist.

5. Material nach einem der Ansprüche 1 bis 4, wobei die gleichförmige Zusammensetzung des Materials zur Speicherung latenter Wärmeenergie mindestens ein Additiv enthält wie bsw. Materialien zur Anpassung der spezifischen Gravität, Mittel zur Verbesserung des Tropfpunktes, verstärkendes Material, Treibmittel und der gleichen.

6. Material nach einem der Ansprüche 1 bis 5, wobei die gleichförmige Zusammensetzung in ausgeformter Gestalt vorliegt.

7. Material nach Anspruch 6, wobei die ausgeformte Gestalt ein Blatt oder eine Platte ist.

8. Material nach Anspruch 7, wobei das Blatt oder die Platte eine Beschichtung oder Imprägnierung einer Folie, eines Gewebes, einer Faser oder dergleichen ist.

9. Material nach Anspruch 7 oder 8, wobei das Blatt mit einer Schutzfolie versehen ist und darüberhinaus mit einer isothermischen Schicht oder mit Laminaten davon.

10. Material nach einem der Ansprüche 1 bis 9, wobei das Material zur Speicherung latenter Wärmeenergie expandiert ist.

11. Material nach einem der Ansprüche 1 bis 10, wobei das organische Kohlenwasserstoffpolymer quervernetzt ist.

12. Verfahren zur Herstellung eines Materials zur Speicherung latenter Wärmeenergie nach einem der Ansprüche 1 bis 11, wobei 5 bis 30 Gewichtsteile mindestens eines organischen Kohlenwasserstoffpolymers, das als Bindemittelbestandteil dient, gleichförmig mit 100 Gewichtsteilen mindestens eines organischen Energiespeicherbestandteils mit einer $T_{max}$ im Bereich vom Raumtemperatur bis zu 100°C, gegebenenfalls zusammen mit geeigneten Additiven durch mechanische Mittel in einem Zustand vermischt werden, bei dem die zwei Bestandteile fließfähig und verformbar gemacht werden, um eine gleichförmige Zusammensetzung zu erhalten.

13. Verwendung eines Materials nach einem der Ansprüche 1 bis 11 als Wärmespeicher-, Wärmeaustausch- oder Wärmeisoliermaterialien.

14. Verwendung eines Materials nach Anspruch 13, wobei das Material für Haushaltsartikel oder Baumaterialien eingesetzt wird.

**Revendications**

1. Matériau d'accumulation d'énergie thermique latente qu'on peut obtenir par un procédé où on mélange uniformément 5 à 30 parties en poids d'au moins un polymère organique hydrocarbure servant de composant liant à 100 parties en poids d'au moins d'un composant d'accumulation d'énergie organique ayant une T max comprise entre la température ambiante et 100°C par des moyens mécaniques dans un état où les deux composants sont rendus coulables et déformables pour donner une composition uniforme.

2. Matériau selon la revendication 1, où le polymère organique hydrocarbure est constitué de polyoléfines, d'élastomères thermoplastiques ou de caoutchoucs hydrocarbures.

3. Matériau d'accumulation d'énergie thermique latente qu'on peut obtenir par un procédé où on mélange 5 à 30 parties en poids d'au moins un polymère organique hydrocarbure, servant de composant liant et qu'on sélectionne parmi (1) les élastomères thermoplastiques et (2) les combinaisons de polyoléfines et de caoutchoucs hydrocarbures, qu'on mélange uniformément à 100 parties en poids d'au moins un composant d'accumulation d'énergie organique ayant une T max comprise entre la température ambiante et 100°C dans un état où on rend les deux composants coulables et déformables pour donner une composition uniforme.

4. Matériau selon l'une quelconque des revendications 1 à 3, où le composant d'accumulation d'énergie est au moins une paraffine.

5. Matériau selon l'une quelconque des revendications 1 à 4, où la composition uniforme de matériau d'accumulation d'énergie thermique latente contient au moins un additif tel que des matériaux réglant la masse spécifique, des agents améliorant le point d'écoulement, des matériaux renforçants, des agents d'expansion et analogues.

6. Matériau selon l'une quelconque des revendications 1 à 5, où la composition uniforme est sous forme moulée.

7. Matériau selon la revendication 6, où la forme moulée est une feuille ou une plaque.

8. Matériau selon la revendication 7, où la feuille ou la plaque est un revêtement ou une imprégnation d'un film, d'un tissu, de fibres ou analogues.

9. Matériau selon les revendications 7 ou 8, où la feuille est recouverte d'un film protecteur et en outre d'une couche isotherme ou de leurs stratifiés.

10. Matériau selon l'une quelconque des revendications 1 à 9, où le matériau d'accumulation d'énergie thermique latente est expansé.

11. Matériau selon l'une quelconque des revendications 1 à 10, où le polymère organique hydrocarbure est réticulé.

12. Procédé de préparation d'un matériau d'accumulation d'énergie thermique latente selon l'une quelconque des revendications 1 à 11, où on mélange uniformément 5 à 30 parties en poids d'au moins un polymère organique hydrocarbure servant de composant liant à 100 parties en poids d'au moins un composant d'accumulation d'énergie organique, ayant une T max comprise entre la température ambiante et 100°C, éventuellement en présence d'additifs appropriés, par des moyens mécaniques dans un état où les deux composants sont rendus coulables et déformables pour donner une composition uniforme.

13. Utilisation d'un matériau selon l'une quelconque des revendications 1 à 11, comme matériaux d'accumulation de chaleur, d'échange thermique ou d'isolation thermique.

14. Utilisation d'un matériau selon la revendication 13, où on utilise le matériau pour des articles domestiques ou des matériaux de construction.